# EUROPEAN PATENT SPECIFICATION

(11) **EP 4 545 755 B1**
(45) Date of publication and mention of the grant of the patent: **25.11.2026**
(21) Application number: 24208428.3
(22) Date of filing: 23.10.2024
(51) Int. Cl.: F01D 5/28, F01D 5/18, F01D 9/06, C04B 35/80

(54) **AIRFOIL AND GAS TURBINE ENGINE**
SCHAUFEL UND GASTURBINENTRIEBWERK
AUBE ET MOTEUR À TURBINE À GAZ

(30) Priority: 27.10.2023 US 202318496267
(43) Date of publication of application: 30.04.2025
(73) Proprietor: RTX Corporation, Farmington, CT 06032 (US)
(72) Inventor: BANHOS, Jonas, Farmington, 06032 (US); WILKINS, Peter, Farmington, 06032 (US); ROACH, James T., Farmington, 06032 (US); KIM, Russell, Farmington, 06032 (US); SURACE, Raymond, Farmington, 06032 (US)
(74) Representative: Dehns

(56) References cited:
- US-A1- 2016 362 985
- US-A1- 2016 363 054
- US-A1- 2018 272 568
- US-A1- 2018 328 189
- US-A1- 2019 210 929
- US-A1- 2019 338 660

## Description

### BACKGROUND

The present invention relates to an airfoil and a gas turbine engine.

A gas turbine engine typically includes a fan section, a compressor section, a combustor section and a turbine section. Air entering the compressor section is compressed and delivered into the combustion section where it is mixed with fuel and ignited to generate a high-pressure and temperature core gas flow. The high-pressure and temperature core gas flow expands through the turbine section to drive the compressor and the fan section. The compressor section may include low and high pressure compressors, and the turbine section may also include low and high pressure turbines.

Airfoils in the turbine section are typically formed of a superalloy and may include thermal barrier coatings to extend temperature capability and lifetime. Ceramic matrix composite ("CMC") materials are also being considered for airfoils. Among other attractive properties, CMCs have high temperature resistance. Despite this attribute, however, there are unique challenges to implementing CMCs in airfoils.

US 2016/362985 A1, US 2016/363054 A1, US 2019/210929 A1, US 2018/272568 A1 and US 2018/328189 A1 disclose prior art airfoils. US 2019/338660 A1 discloses an airfoil comprising a platform, and an airfoil section extending from the platform, the airfoil section including one internal cavity, the airfoil section and the platform being formed of a ceramic matrix composite having fiber plies and a ceramic matrix, the fiber plies including one core ply defining a radial tube, the radial tube circumscribing the internal cavity, skin fiber plies defining an exterior of the airfoil section, the skin fiber plies wrapping around the first and second groups of core fiber plies, and platform fiber plies extending in the platform adjacent the skin fiber plies.

### SUMMARY

An airfoil according to an aspect of the present invention is provided according to claim 1.

Features of embodiments of the invention are set forth in the dependent claims.

### BRIEF DESCRIPTION OF THE DRAWINGS

The various features and advantages of the present invention will become apparent to those skilled in the art from the following detailed description. The drawings that accompany the detailed description can be briefly described as follows.
Figure 1 illustrates a gas turbine engine.
Figure 2 illustrates an airfoil from the engine.
Figure 3A illustrates fiber plies of the airfoil.
Figure 3B illustrates an enlarged view of the fiber plies.
Figure 4 illustrates the airfoil with several skin plies excluded so that a cooling passage is visible.
Figure 5 illustrates a section of a cooling passage in the platform of the airfoil.
Figure 6 illustrates another example of a cooling passage that extends across the leading edge vicinity of the airfoil section.
Figure 7 illustrates an example method for fabricating an airfoil.
Figure 8 illustrates slots formed in the fiber plies prior to densification with the matrix.

Like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

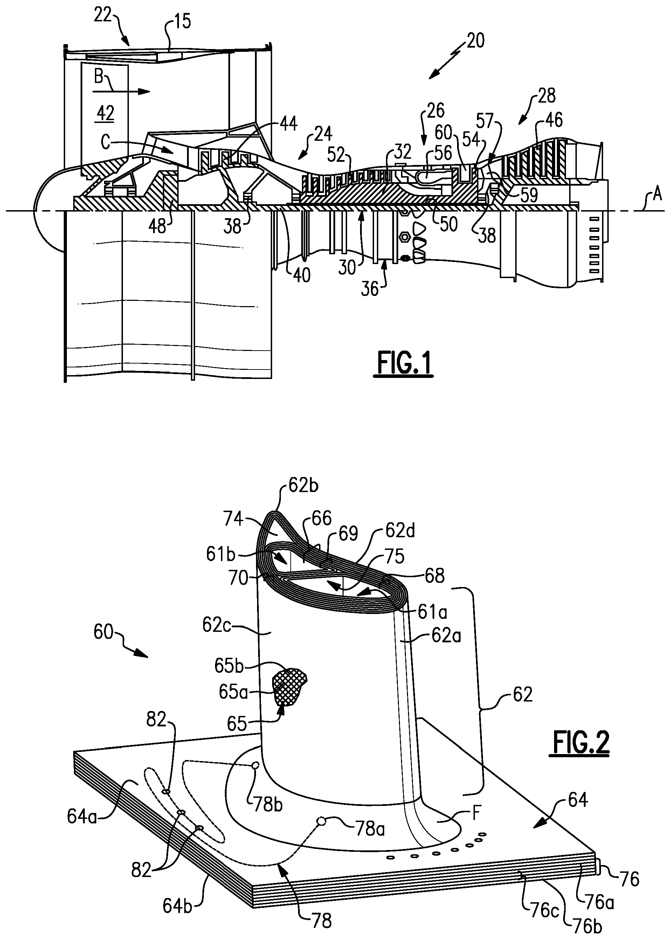

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

Figure 2 illustrates an airfoil 60 from the engine 20. For example, the airfoil 60 is a turbine vane from the turbine section 28 of the engine 20, and there are a plurality of turbine vanes arranged in a circumferential row in the turbine section 28. The airfoil 60 is hollow and includes an airfoil section 62 and a platform 64. The airfoil section 62 defines a leading edge 62a, a trailing edge 62b, a suction side 62c, and a pressure side 62d. The platform 64 includes a core gaspath side 64a and an opposite, non-core-gaspath side 64b. In the examples below, the platform is at a radially inner end of the airfoil section 62, although it is to be understood that the platform 64 may alternatively be at the radially outer end, or the airfoil 60 may include an additional platform 64 at the radially outer end.

The airfoil 60 is formed of a ceramic matrix composite (CMC) 65. Referring to the cutaway section in Figure 2, the CMC 65 includes ceramic fibers 65a that are disposed in a ceramic matrix 65b. The CMC 65 may be, but is not limited to, a SiC/SiC composite in which SiC fibers are disposed within a SiC matrix. The ceramic fibers 65a are provided in fiber plies 66 that may be woven or braided and may collectively include fiber plies of different fiber weave configurations.

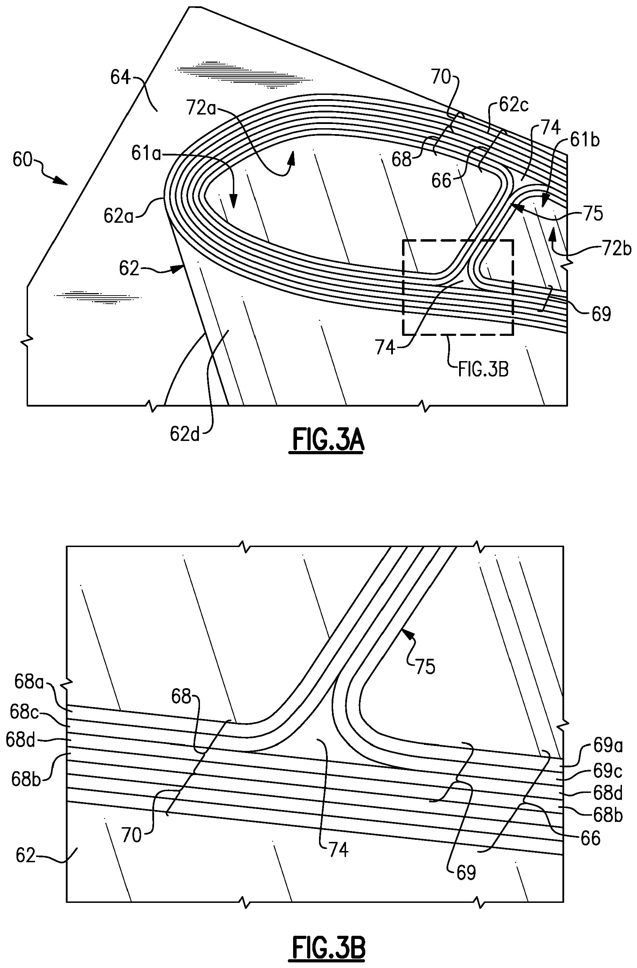

Referring also to the view in Figure 3A, and the enlarged view in Figure 3B (inset from Figure 2), the fiber plies 66 include first and second groups of core fiber plies 68/69 and skin fiber plies 70. The groups of core fiber plies 68/69 define respective first and second radial tubes 72a/72b that circumscribe first and second internal cavities 61a/61b. The skin fiber plies 70 define the exterior profile of the airfoil 60 and wrap around the core fiber plies 68/69 from the pressure side 62d at the trailing edge 62b, through the leading edge 62a, and to the suction side 62c at the trailing edge 62b. In the illustrated example, there are four fiber plies in each group of core fiber plies 68/69 and three of the skin fiber plies 70, although it is to be understood that the numbers of core and skin fiber plies can be varied.

Each group of the core fiber plies 68/69 includes, relative to the associated internal cavity 61a/61b, an innermost core fiber ply 68a/69a, an outermost core fiber ply 68b, an inner intermediate core fiber ply 68c/69c and an outer intermediate core fiber ply 68d between the innermost core fiber ply 68a/69a and the outermost core fiber ply 68b. That is, the outer intermediate core fiber ply 68d and the outermost core fiber ply 68b are common to both groups. As such, the innermost fiber ply 68a and the inner one of the intermediate fiber plies 68c circumscribe the individual internal cavity 61a. Likewise, the innermost fiber ply 69a and the inner one of the intermediate fiber plies 69c circumscribe the individual internal cavity 61b, while the common fiber plies 68b/68d encompass both internal cavities 61a/61b.

Filler elements 74 are provided in interstitial regions where there is space between fiber plies 66, such as near the trailing edge 62b and at the ends of a rib 75 in the airfoil 60 where the fiber plies 66 turn. For example, the filler elements 74 are prefabricated monolithic or CMC pieces. In this example (see Figure 2), two of the skin fiber plies 70 flare outwardly through a fillet F into the platform 64 and form the surface that is the gaspath side 64a of the platform 64. The platform 64 includes additional platform fiber plies 76 that extend adjacent to the skin fiber plies 70 and make up the radial thickness of the platform 64. With respect to proximity to the gaspath side 64a of the platform ("first" being closest in proximity, followed by "second"), the platform fiber plies 76 include a first platform fiber ply 76a, a second platform fiber ply 76b, and at least one intermediate platform fiber ply 76c (two shown) between the first and second fiber plies 76a/76b.

The sides 62c/62d of the airfoil section 62, the fillet F, and the platform 64 may require cooling. In that regard, the airfoil 60 includes at least one closed-circuit cooling passage 78 (shown schematically in Figure 2) for a flow of cooling air. For example, the cooling air is bleed air from the compressor section 24 that is provided into the internal cavities 61a/61b. As will be discussed further below, there is a pressure differential between the cooling air provided to the internal cavities 61a/61b, which drives flow from one internal cavity 61a or 61b to the other internal cavity 61b or 61a through the closed-circuit cooling passage 78. As used herein, the term "closed-circuit" refers to a closed or substantially closed flow path that begins inside of the airfoil section 62 from one of the internal cavities 61a or 61b, exits the airfoil section 62 and runs through a portion of the platform 64, and then returns to inside the airfoil to one of the internal cavities 61a/61b. The phrase "closed or substantially closed" means that all or substantially all of the flow along the flow path travels the entire path, as opposed to flow that is dumped overboard into the core gaspath (e.g., as film cooling). For instance, as demonstrated in Figure 2, there optionally are cooling holes 82 along the flow path for film cooling, but some of the flow passes by the cooling holes 82 without discharge and thus continues along the entire path.

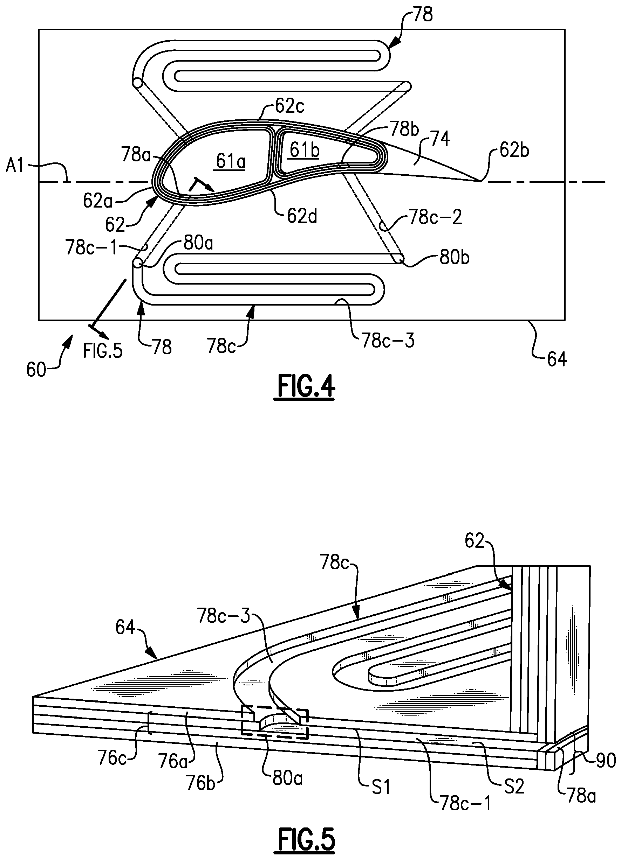

Figure 4 illustrates the airfoil 60 with the skin fiber plies 70 removed so that the closed-circuit cooling passage 78 is visible. In this example, there are two closed-circuit cooling passages 78, one on the suction side 62c and the other on the pressure side 62d. As shown, the closed-circuit cooling passages 78 are symmetric about a line of symmetry A1 in order to facilitate uniform cooling, but in other examples where there are multiple closed-circuit cooling passages 78, the closed-circuit cooling passages 78 can be non-symmetric. In general, with respect to the flow direction through the closed-circuit cooling passage 78, each closed-circuit cooling passage 78 initiates from the first internal cavity 61a, extends within the platform 64, and then ends at the second internal cavity 61b. In this example, the flow direction assumes that internal cavity 61a is a high-pressure cavity and that internal cavity 61b is a low-pressure cavity.

Each closed-circuit cooling passage 78 has several sections, including an inlet orifice 78a (Figure 2) that opens to the first internal cavity 61a, an outlet orifice 78b that opens to the second internal cavity 61b, and a platform passage section 78c in the platform 64, that connects the inlet orifice 78a to the outlet orifice 78b. Examples of each of these sections are discussed in further detail as follows.

The inlet orifice 78a and the outlet orifice 78b open through the innermost core fiber plies 68a/69a to the internal cavities 61a/61b. In the illustrated example, the orifices 78a/78b also extend through the inner one of the intermediate core fiber plies 68c/69c (Figure 3B). The orifices 78a/78b in one example each have a centerline that is substantially perpendicular to the localized face of the innermost core fiber ply 68a/69a in the internal cavities 61a/61b. Such an orientation may be considered to be a "neutral" orientation with regard to cooling air flow. In one alternative example, one or both of the orifices 78a/78b are sloped, such as in a radial direction, to facilitate control of flow of the cooling air through the closed-circuit cooling passage 78. A sloped orientation may be considered to be a "non-neutral" orientation that either increases or decreases flow, in comparison to the neutral orientation.

The platform passage section 78c includes several sub-sections, including first and second collection channels 78c-1/78c-2 and a serpentine channel 78c-3. The collection channels 78c-1/78c-2 extend from, respectively, the inlet orifice 78a and the outlet orifice 78b and serve to collect and convey cooling air from or to the orifices 78a/78b. The serpentine channel 78c-3 connects the collection channels 78c-1/78c-2 and serves to traverse a section of the platform 64 to absorb heat and thus cool the platform 64. The cooling holes 82, if present, are located along the serpentine channel 78c-3, but may alternatively or additionally be located along one or both of the collection channels 78c-1/78c-2. As shown in Figure 4, the serpentine channel 78c-3 is a 3-pass channel (an aft pass, a forward pass, and another aft pass), but could alternatively have two passes or more than three passes, such as five or seven passes. In other examples, rather than a configuration of passage legs with 180° turns, the serpentine channel 78c-3 has turns of less than 180° such that it winds about the platform 64 without necessarily turning back on itself.

Figure 5 shows a sectioned view along the length of the first collection channel 78c-1. The first collection channel 78c-1 is laterally (in the plane of the platform 64) bound along its length by one of the intermediate platform fiber plies 76c (the one that is contiguous with the first platform fiber ply 76a), is bound on a first radial side S1 by the first platform fiber ply 76a, and is bound on the opposite, second radial side S2 by another of the intermediate platform fiber plies 76c (the one contiguous with the second intermediate platform fiber ply 76b). The second collection channel 78c-2 is of the same configuration.

The serpentine channel 78c-3 is laterally (in the plane of the platform 64) bound along its length by the first intermediate platform fiber ply 76a (that is contiguous with the last of the skin fiber plies 70), is bound on a first radial side by one of the skin fiber plies 70 (the one contiguous with the first platform fiber ply fiber ply 76a), which is excluded in Figure 5 but extends across the serpentine channel 78c-3 shown, and is bound on a second radial side by one of the intermediate platform fiber plies 76c (the one that is contiguous with the first intermediate platform fiber ply 76a).

The terminal ends of the serpentine channel 78c-3 meet and connect with the collection channels 78c-1/78c-2 at respective first and second exchange regions 80a/80b. Exchange region 80a is shown in Figure 5, and the exchange region 80b is of the same configuration. The exchange region 80a has a radial thickness of two fiber plies and is laterally bound by the first platform fiber ply 76a and one of the intermediate platform fiber plies 76c (the one contiguous with the first platform fiber ply 76a). Thus, the exchange regions 80a/80b provide a radial offset, or step-down, between the serpentine channel 78c-3 and the collection channels 78c-1/78c-2. That is, the serpentine channel 78c-3 is at a different ply "level" than the collection channels 78c-1/78c-2. As a result, the serpentine channel 78c-3 is relatively close (three fiber ply thicknesses) to the gaspath side 64a of the platform 64 (i.e., "outboard"), while the collection channels 78c-1/78c-2 are relative farther (four ply thicknesses) from the gaspath side 64a (i.e., "inboard").

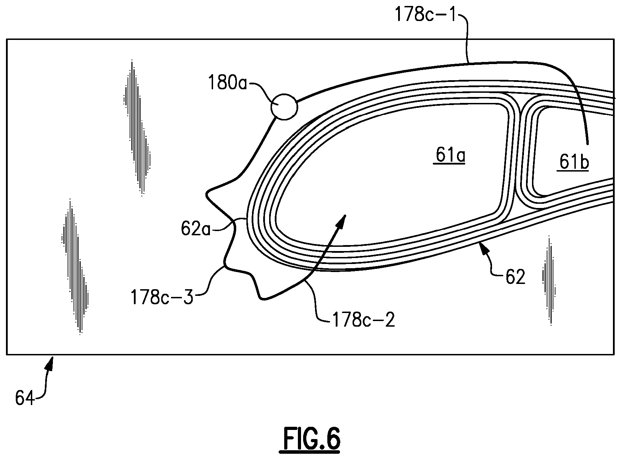

The outboard proximity of the serpentine channel 78c-3 to the gaspath side 64a facilitates increased cooling of the gaspath side 64a, while the inboard proximity of the collection channels 78c-1/78c-2 provides slightly less cooling, as there is an additional ply. Such a cooling differential may also be used to counteract induced stresses in the platform 64. For example, the exchange regions 80a/80b can be selectively located near a zone in the platform 64, such as the leading edge 62a and fillet F at the leading edge 62a, that is expected to experience tensile stress, and the cooling differential provides a thermal gradient that induces compressive stress in the zone which counteracts, at least on part, the tensile stress, to provide a net reduction in stress. One example is depicted in Figure 6, where exchange region 180a connects collection channel 178c-1 to serpentine channel 178c-3 in the vicinity of the leading edge 62a. The second collection channel 178c-2 is located in the opposite side of the airfoil section 62 from the first collection channel 178c-1.

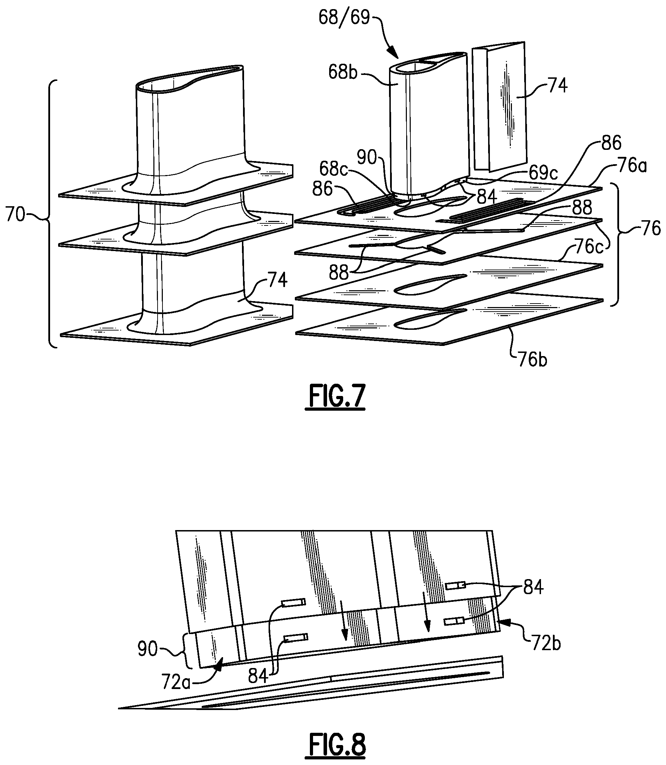

Figure 7 depicts a method for fabricating an airfoil 60 according to the examples herein. Although not limited, the depicted example is based upon a fiber ply lay-up process on which the various fiber plies 66 and filler elements 74 are laid-up to form a preform. For example, the fiber plies 66 initially contain no matrix. The core fiber plies 68a/69a (not shown) and 68c/69c are provided with through-slots 84, which may be formed by laser cutting or other suitable technique that does not substantially damage the fibers or result in undesirably uneven cut lines. The core fiber plies 68/69 are laid-up on a mandrel or other support surface such that the through-slots 84 align to form the inlet and outlet orifices 78a/78b. The filler elements 74 are positioned adjacent to the core fiber plies 68/69. The skin fiber plies 70 are then wrapped around the core fiber plies 68/69 and the filler elements 74, and the platform fiber plies 76 are laid-up adjacent to the flared portions of the skin fiber plies 70 to form the platform 64. The first platform fiber ply 76a includes serpentine through-slots 86 to form the serpentine channel 78c-3, and the first of the intermediate platform fiber plies 76c includes straight slots 88 to form the collection channels 78c-1/78c-2. As shown in Figure 8, each of the first and second radial tubes 72a/72b has a radial end region 90 that extends into the platform 64 (see Figure 5), and the slots 84 (inlet and outlet orifices 78a/78b) are located in the radial end region 90.

The assembled preform is then densified with the ceramic matrix to form the CMC 65. For example, the ceramic matrix is formed by, but not limited to, chemical vapor infiltration (CVI), melt infiltration (MI), a hybrid of CVI and MI, and/or polymer infiltration and pyrolysis (PIP).

The disclosed methodology enables the closed-circuit cooling passage 78 to be formed prior to densification. This eliminates a need for machining the closed-circuit cooling passage 78 into the final CMC and also enables enhanced densification of the CMC 65. For instance, densification depends to some extent on the ability of the matrix material or matrix precursor material (i.e., infiltrants) to flow into all depths of the preform during the densification process so that the preform becomes fully densified. In some cases, however, the thickness of the preform can exceed a depth at which the infiltrants can readily flow under practical processing conditions and times and achieve the desired density. As a result, the preform may be only partially densified in some regions, with pores or voids in the regions that the infiltrant cannot reach. The through-slots 84/86/88 provide additional flow paths for the matrix material or matrix precursor material during densification and thereby can enhance densification in regions that may otherwise not be fully densified.

Although a combination of features is shown in the illustrated examples, not all of them need to be combined to realize the benefits of various embodiments of this invention. In other words, a system designed according to an embodiment of this invention will not necessarily include all of the features shown in any one of the Figures or all of the portions schematically shown in the Figures. Moreover, selected features of one example embodiment may be combined with selected features of other example embodiments.

## Claims

1. An airfoil comprising:
a platform (64); and
an airfoil section (62) extending from the platform (64), the airfoil section (62) including first and second internal cavities (61a, 61b), the airfoil section (62) and the platform (64) being formed of a ceramic matrix composite (65) having fiber plies (66) and a ceramic matrix (65b), the fiber plies (66) including:
first and second groups of core fiber plies (68, 69) respectively defining first and second radial tubes (72a, 72b), the first and second radial tubes (72a, 72b) circumscribing, respectively, the first and second internal cavities (61a, 61b),
skin fiber plies (70) defining an exterior of the airfoil section (62), the skin fiber plies (70) wrapping around the first and second groups of core fiber plies (68, 69) and flaring outwardly through a fillet (F) into the platform (64),
platform fiber plies (76) extending in the platform (64) adjacent to the skin fiber plies (70); and
at least one closed-circuit cooling passage (78) defined in the fiber plies (66), the at least one closed-circuit cooling passage (78) initiating from the first internal cavity (61a), extending within the platform (64), and ending at the second internal cavity (61b).

2. The airfoil as recited in claim 1, wherein the at least one closed-circuit cooling passage (78) includes a serpentine channel (78c-3) along the platform fiber plies (76).

3. The airfoil as recited in claim 1 or 2, wherein the at least one closed-circuit cooling passage (78) includes a platform passage section (78c) in the platform (64), the platform passage section (78c) having an exchange region (80a, 80b) that extends through two of the platform fiber plies (76) and connects legs of the platform passage section (78c) that are radially offset from each other.

4. The airfoil as recited in any preceding claim, wherein each of the first and second groups of core fiber plies (68, 69) include, relative to the first and second internal cavities (61a, 61b), an innermost core fiber ply (68a, 69a), an outermost core fiber ply (68b), and at least one intermediate core fiber ply (68d) between the innermost core fiber ply (68a, 69a) and the outermost core fiber ply (68b), the at least one closed-circuit cooling passage (78) including an inlet orifice (78a) that opens to the first internal cavity (61a) and an outlet orifice (78b) that opens to the second internal cavity (61b).

5. The airfoil as recited in claim 4, wherein each of the first and second radial tubes (72a, 72b) have a radial end region (90) that extends into the platform (64), and the inlet and outlet orifices (78a, 78b) are located in the radial end region (90).

6. The airfoil as recited in claim 4 or 5, wherein the at least one closed-circuit cooling passage (78) includes a or the platform passage section (78c) in the platform (64), the platform passage section (78c) connecting the inlet orifice (78a) to the outlet orifice (78b).

7. The airfoil as recited in claim 6, wherein the platform passage section (78c) includes first and second collection channels (78c-1, 78c-2) extending from, respectively, the inlet orifice (78a) and the outlet orifice (78b), and a serpentine channel (78c-3) connecting the first and second collection channels (78c-1, 78c-2).

8. The airfoil as recited in claim 7, wherein the platform fiber plies (76) include first and second platform fiber plies (76), and at least one intermediate platform fiber ply (76a) between the first and second platform fiber plies (76), the first and second collection channels (78c-1, 78c-2) being laterally bound by the at least one intermediate platform fiber ply (76a).

9. The airfoil as recited in claim 8, wherein the at least one closed-circuit cooling passage (78) includes first and second exchange regions (80a, 80b), the first exchange region (80a) connecting the first collection channel (78c-1) to the serpentine channel (78c-3), the second exchange region (80b) connecting the serpentine channel (78c-3) to the second collection channel, each of the first and second exchange regions (80a, 80b) is laterally bound by the first platform fiber ply (76) and the at least one intermediate platform fiber ply (76a).

10. The airfoil as recited in any preceding claim, wherein the platform (64) includes cooling holes (82) along a or the platform passage section (78c).

11. The airfoil as recited in any preceding claim, wherein a or the serpentine channel (78c-3) is laterally bound by a or the first platform fiber ply (76).

12. The airfoil as recited in any preceding claim, wherein, relative to each other, the first internal cavity (61a) is a high-pressure cavity and the second internal cavity (61b) is a low-pressure cavity.

13. A gas turbine engine comprising:
a compressor section (24);
a combustor (56) in fluid communication with the compressor section (24); and
a turbine section (28) in fluid communication with the combustor (56), the turbine section (28) having the airfoil (60) of any preceding claim.

## Patentansprüche

1. Schaufelblatt, umfassend:
eine Plattform (64); und
ein Schaufelblatt-Teilabschnitt (62), der sich von der Plattform (64) erstreckt, wobei das Schaufelblattprofil (62) einen ersten und einen zweiten inneren Hohlraum (61a, 61b) aufweist, wobei das Schaufelblattprofil (62) und die Plattform (64) aus einem keramischer Matrixverbundwerkstoff (65) mit Faserlagen (66) und einer keramischen Matrix (65b) bestehen, wobei die Faserlagen (66) Folgendes umfassen:
erste und zweite Gruppen von Kernfaserlagen (68, 69), die jeweils erste und zweite radiale Röhren (72a, 72b) definieren, wobei die erste und zweite radiale Röhre (72a, 72b) jeweils den ersten und zweiten inneren Hohlraum (61a, 61b) umschließen.
Die Außenhautfaserlagen (70) bilden die Außenseite des Schaufelblattprofils (62). Die Außenhautfaserlagen (70) umschließen die erste und zweite Gruppe der Kernfaserlagen (68, 69) und weiten sich durch eine Verrundung (F) nach außen in die Plattform (64) auf.
Plattformfaserlagen (76), die in der Plattform (64) an den Außenhaut- Faserlagen (70) erstrecken; und
mindestens ein geschlossener Kühlkreislauf (78) in den Faserlagen (66), wobei der mindestens eine geschlossene Kühlkreislauf (78) vom ersten inneren Hohlraum (61a) ausgeht, sich innerhalb der Plattform (64) erstreckt und im zweiten inneren Hohlraum (61b) endet.

2. Schaufelblattprofil nach Anspruch 1, wobei der mindestens eine geschlossene Kühlkreislaufkanal (78) einen gewundenen Kanal (78c-3) entlang der Plattformfaserlagen (76) aufweist.

3. Schaufelblattprofil nach Anspruch 1 oder 2, wobei der mindestens eine geschlossene Kühlkreislaufkanal (78) einen Plattformkanal-Teilabschnitt (78c) in der Plattform (64) aufweist, wobei der Plattformkanal-Teilabschnitt (78c) eine Austauschregion (80a, 80b) aufweist, die sich durch zwei der Plattformfaserlagen (76) erstreckt und Schenkel des Plattformkanal-Teilabschnitts (78c) verbindet, die radial zueinander versetzt sind.

4. Schaufelblattprofil nach einem der vorhergehenden Ansprüche, wobei jede der ersten und zweiten Gruppen von Kernfaserlagen (68, 69) in Bezug auf den ersten und zweiten inneren Hohlraum (61a, 61b) eine innerste Kernfaserlage (68a, 69a), eine äußerste Kernfaserlage (68b) und mindestens eine mittlere Kernfaserlage (68d) zwischen der innersten Kernfaserlage (68a, 69a) und der äußersten Kernfaserlage (68b) aufweist, sowie mindestens einen geschlossenen Kühlkreislaufkanal (78) mit einer Einlassöffnung (78a), die sich zum ersten inneren Hohlraum (61a) öffnet, und einer Auslassöffnung (78b), die sich zum zweiten inneren Hohlraum (61b) öffnet.

5. Schaufelblattprofil nach Anspruch 4, wobei jedes der ersten und zweiten Radialrohre (72a, 72b) einen radialen Endbereich (90) aufweist, der sich in die Plattform (64) erstreckt, und die Einlass- und Auslassöffnungen (78a, 78b) im radialen Endbereich (90) angeordnet sind.

6. Schaufelblattprofil nach Anspruch 4 oder 5, wobei der mindestens eine geschlossene Kühlkreislaufkanal (78) einen Plattformdurchgangs-Teilabschnitt (78c) in der Plattform (64) aufweist, wobei der Plattformdurchgangs-Teilabschnitt (78c) die Einlassöffnung (78a) mit der Auslassöffnung (78b) verbindet.

7. Schaufelblattprofil nach Anspruch 6, wobei der Plattformdurchgangs-Teilabschnitt (78c) einen ersten und einen zweiten Sammelkanal (78c-1, 78c-2) umfasst, die sich jeweils von der Einlassöffnung (78a) und der Auslassöffnung (78b) erstrecken, sowie einen gewundenen Kanal (78c-3), der den ersten und zweiten Sammelkanal (78c-1, 78c-2) miteinander verbindet.

8. Schaufelblattprofil nach Anspruch 7, wobei die Plattformfaserlagen (76) eine erste und eine zweite Plattformfaserlage (76) sowie mindestens eine Zwischenplattformfaserlage (76a) zwischen der ersten und der zweiten Plattformfaserlage (76) umfassen, wobei die ersten und zweiten Sammelkanäle (78c-1, 78c-2) seitlich durch die mindestens eine Zwischenplattformfaserlage (76a) begrenzt werden.

9. Schaufelblattprofil nach Anspruch 8, wobei der mindestens eine geschlossene Kühlkreislaufkanal (78) einen ersten und einen zweiten Austauschbereich (80a, 80b) aufweist, wobei der erste Austauschbereich (80a) den ersten Sammelkanal (78c-1) mit dem gewundenen Kanal (78c-3) verbindet, der zweite Austauschbereich (80b) den gewundenen Kanal (78c-3) mit dem zweiten Sammelkanal verbindet und jeder der ersten und zweiten Austauschbereiche (80a, 80b) seitlich durch die erste Plattformfaserlage (76) und die mindestens eine Zwischenplattformfaserlage (76a) begrenzt wird.

10. Schaufelblattprofil nach einem der vorhergehenden Ansprüche, wobei die Plattform (64) Kühlöffnungen (82) entlang des Plattformdurchgangs-Teilabschnitts (78c) aufweist.

11. Schaufelblattprofil nach einem der vorhergehenden Ansprüche, wobei ein oder der gewundene Kanal (78c-3) seitlich durch eine oder die erste Plattformfaserlage (76) begrenzt wird.

12. Schaufelblattprofil nach einem der vorhergehenden Ansprüche, wobei der erste innere Hohlraum (61a) im Verhältnis zueinander ein Hochdruckhohlraum und der zweite innere Hohlraum (61b) ein Niederdruckhohlraum ist.

13. Gasturbinentriebwerk, Folgendes umfassend:
einen Verdichterabschnitt (24);
eine Brennkammer (56) in Fluidverbindung mit dem Verdichterabschnitt (24); und
einen Turbinenteil (28) in Fluidverbindung mit der Brennkammer (56), wobei der Turbinenteil (28) die Schaufel (60) nach einem der vorhergehenden Ansprüche aufweist.

## Revendications

1. Profil aérodynamique comprenant :
une plateforme (64) ; et
une section de profil aérodynamique (62) s'étendant depuis la plateforme (64), la section de profil aérodynamique (62) incluant des première et deuxième cavités internes (61a, 61b), la section de profil aérodynamique (62) et la plateforme (64) étant formées d'un composite à matrice céramique (65) comportant des plis de fibres (66) et une matrice céramique (65b), les strates de fibres (66) incluant :
des premier et deuxième groupes de plis de fibres d'âme (68, 69) définissant respectivement des premier et deuxième tubes radiaux (72a, 72b), les premier et deuxième tubes radiaux (72a, 72b) circonscrivant respectivement les première et deuxième cavités internes (61a, 61b),
des plis de fibres de peau (70) définissant un extérieur de la section de profil aérodynamique (62), les plis de fibres de peau (70) enveloppant les premier et deuxième groupes de plis de fibres d'âme (68, 69) et s'évasant vers l'extérieur à travers un congé (F) dans la plateforme (64),
des plis de fibres de plateforme (76) s'étendant dans la plateforme (64) adjacents aux plis de fibres de peau (70) ; et
au moins un passage de refroidissement en circuit fermé (78) défini dans les plis de fibres (66), le au moins un passage de refroidissement en circuit fermé (78) commençant à partir de la première cavité interne (61a), s'étendant à l'intérieur de la plateforme (64) et se terminant à la deuxième cavité interne (61b).

2. Profil aérodynamique selon la revendication 1, dans lequel le au moins un passage de refroidissement en circuit fermé (78) inclut un canal serpentin (78c-3) le long des plis de fibres de plateforme (76).

3. Profil aérodynamique selon la revendication 1 ou 2, dans lequel au moins un passage de refroidissement en circuit fermé (78) inclut une section de passage de plateforme (78c) dans la plateforme (64), la section de passage de plateforme (78c) comportant une région d'échange (80a, 80b) qui s'étend à travers deux des plis de fibres de plateforme (76) et relie les jambes de la section de passage de plateforme (78c) qui sont décalées radialement l'une par rapport à l'autre.

4. Profil aérodynamique selon l'une quelconque des revendications précédentes, dans lequel chacun des premier et deuxième groupes de plis de fibres d'âme (68, 69) inclut, par rapport aux première et deuxième cavités internes (61a, 61b), un pli de fibres d'âme le plus interne (68a, 69a), un pli de fibres d'âme le plus externe (68b) et au moins un pli de fibres d'âme intermédiaire (68d) entre le pli de fibres d'âme le plus interne (68a, 69a) et le pli de fibres d'âme le plus externe (68b), au moins un passage de refroidissement en circuit fermé (78) comprenant un orifice d'entrée (78a) qui s'ouvre sur la première cavité interne (61a) et un orifice de sortie (78b) qui s'ouvre sur la deuxième cavité interne (61b).

5. Profil aérodynamique selon la revendication 4, dans lequel chacun des premier et deuxième tubes radiaux (72a, 72b) comporte une région d'extrémité radiale (90) qui s'étend dans la plateforme (64), et les orifices d'entrée et de sortie (78a, 78b) sont situés dans la région d'extrémité radiale (90).

6. Profil aérodynamique selon la revendication 4 ou 5, dans lequel le au moins un passage de refroidissement en circuit fermé (78) inclut une ou la section de passage de plateforme (78c) dans la plateforme (64), la section de passage de plateforme (78c) reliant l'orifice d'entrée (78a) à l'orifice de sortie (78b).

7. Profil aérodynamique selon la revendication 6, dans lequel la section de passage de plateforme (78c) inclut des premier et deuxième canaux de collecte (78c-1, 78c-2) s'étendant respectivement de l'orifice d'entrée (78a) et de l'orifice de sortie (78b), et un canal serpentin (78c-3) reliant les premier et deuxième canaux de collecte (78c-1, 78c-2).

8. Le profil aérodynamique selon la revendication 7, dans lequel les plis de fibres de plateforme (76) comprennent un premier et un deuxième pli de fibres de plateforme (76), et au moins un pli de fibres de plateforme intermédiaire (76a) entre le premier et le deuxième pli de fibres de plateforme (76), les premier et deuxième canaux de collecte (78c-1, 78c-2) étant latéralement liés par au moins un pli de fibres de plateforme intermédiaire (76a).

9. Profil aérodynamique selon la revendication 8, dans lequel le au moins un passage de refroidissement en circuit fermé (78) inclut des première et deuxième régions d'échange (80a, 80b), la première région d'échange (80a) reliant le premier canal de collecte (78c-1) au canal serpentin (78c-3), la deuxième région d'échange (80b) reliant le canal serpentin (78c-3) au deuxième canal de collecte, chacune des première et deuxième régions d'échange (80a, 80b) est latéralement délimitée par le premier pli de fibres de plateforme (76) et au moins le au moins un pli de fibres de plateforme intermédiaire (76a).

10. Profil aérodynamique selon l'une quelconque des revendications précédentes, dans lequel la plateforme (64) comprend des trous de refroidissement (82) le long d'une ou de la section de passage de plateforme (78c).

11. Profil aérodynamique selon l'une quelconque des revendications précédentes, dans lequel un canal serpentin (78c-3) est latéralement lié par un ou le premier pli de fibre de plateforme (76).

12. Profil aérodynamique selon l'une quelconque des revendications précédentes, dans lequel, l'une par rapport à l'autre, la première cavité interne (61a) est une cavité à haute pression et la deuxième cavité interne (61b) est une cavité à basse pression.

13. Moteur à turbine à gaz comprenant :
une section de compresseur (24) ;
une chambre de combustion (56) en communication fluidique avec la section de compresseur (24) ; et
une section de turbine (28) en communication fluidique avec la chambre de combustion (56), la section de turbine (28) comportant le profil aérodynamique (60) selon l'une quelconque des revendications précédentes.
